Europäisches Patentamt

European Patent Office

Office européen des brevets

(19)

(11) Veröffentlichungsnummer: **0 256 371**
**B1**

## (12) EUROPÄISCHE PATENTSCHRIFT

(45) Veröffentlichungstag der Patentschrift:
05.09.90

(51) Int. Cl.⁵: **B23D 25/12**

(21) Anmeldenummer: 87110953.4

(22) Anmeldetag: 29.07.87

(54) Anlauf- und Durchlauftrommelschere für hohe Drahtgeschwindigkeiten.

(30) Priorität: 12.08.86 DE 3627263

(43) Veröffentlichungstag der Anmeldung:
24.02.88 Patentblatt 88/8

(45) Bekanntmachung des Hinweises auf die Patenterteilung:
05.09.90 Patentblatt 90/36

(84) Benannte Vertragsstaaten:
AT DE ES GB IT SE

(56) Entgegenhaltungen:
DD-A- 212 658
DE-A- 3 020 084
DE-A- 3 042 171
DE-C- 1 051 613
GB-A- 2 075 899
US-A- 2 170 255
US-A- 2 701 016

(73) Patentinhaber: SMS SCHLOEMANN-SIEMAG
AKTIENGESELLSCHAFT,
Eduard-Schloemann-Strasse 4, D-4000 Düsseldorf 1(DE)

(72) Erfinder: David, Siegfried, Mozartstrasse 10,
D-5900 Hilchenbach(DE)

(74) Vertreter: Müller, Gerd, Patentanwälte
HEMMERICH-MÜLLER-GROSSE-POLLMEIER-MEY
Hammerstrasse 2, D-5900 Siegen 1(DE)

ACTORUM AG

## Beschreibung

Die Erfindung betrifft gemäss Oberbegriff des Patentanspruchs eine Anlauf- und Durchlauftrommelschere für hohe Drahtgeschwindigkeiten, mit der der Walzdraht am vorderen und hinteren Ende geschopft werden kann. Bei Anordnung von zwei in Umfangsrichtung versetzt angeordneten Messerpaaren auf den umlaufenden Trommeln im Sinne der DE-AS 1 051 613 kann aus dem laufenden Draht auch ein Probestück herausgetrennt werden. Aus dieser Druckschrift geht auch hervor, daß das zusätzliche zweite Messerpaar entweder durch Ablenkung des Walzgutes oder durch Verschieben der Schere quer zur Laufrichtung des Walzgutes zum Schnitt bringbar ist, und zwar für eine aus dem Stand anlaufende, d.h. nicht für hohe Drahtgeschwindigkeiten geeignete Schere.

Die Erfindung geht indessen aus von einer Anlauf- und Durchlauftrommelschere nach der DE-OS 3 020 084, bei der der Scherenständer auf einer Sohlplatte ruhend um eine vertikale Achse zwischen zwei Grenzlagen derart verschwenkbar angeordnet ist, daß die Schnittrichtung der Schere wechselweise der Walzlinie oder einem Ablenkkanal zugeordnet ist, wobei der Trennschnitt durch eine synchronisierte relative Querverschiebung zwischen Walzgut und Scherenmesser bzw. Schere erfolgt.

Die Lösung nach der DE-OS 3 020 084 sieht konkret vor, die Trommelschere oder zumindest die Messer gegenüber einer feststehenden Walzlinie in den beiden Grenz-Schwenklagen der Schere quer zu bewegen, um auch einen Durchlaufbetrieb oder einen zeitlich verlängerten Anlaufbetrieb zu ermöglichen. In den beiden Ruhepositionen der Schere bzw. der Scherenmesser seitlich der Walzlinie können die Trommeln dann nämlich mehrere Umdrehungen ausführen, wobei ein Schnitt erfolgt, wenn die Messerbahn aufgrund einer Querbewegung der Schere die Walzlinie durchwandert, durch die ausschließlich ein nachfolgendes Teilstück des Drahtes in eine andere Richtung gezogen wird.

Eine Querbewegung der gesamten Trommelschere bedeutet natürlich wegen deren großen Masse einen entsprechend kräftigen Stellantrieb. Eine Querbewegung allein der Schneidmesser oder deren Messerträger, wie sie nach der DE-AS 1 051 613, Fig. 6, möglich wäre, bereitet jedoch Schwierigkeiten hinsichtlich der Synchronisation zwischen der Querbewegung und der Rotation der Messer im Sinne der DE-OS 3 020 084.

Ausgehend von einer Anlauf- und Durchlauftrommelschere nach dem Oberbegriff des Patentanspruches 1 liegt der Erfindung die Aufgabe zugrunde, bei der synchronisierten relativen Querbewegung zwischen Walzgut und Scherenmesser bzw. Schere möglichst wenig Masse zu bewegen, was sich auf den Stellantrieb günstig auswirkt. Die Lösung dieser Aufgabe erfolgt an einer Schere gemäss Oberbegriff durch die kennzeichnenden Merkmale des Patentanspruches. Die Erfindung macht zwar von dem an sich bekannten Merkmal der Ablenkung des Walzgutes zur Durchführung eines Trennschnittes Gebrauch, jedoch mit der Maßgabe, daß unter Berücksichtigung der Schwenkbarkeit der gesamtem Schere in zwei Grenzlagen das Walzgut einlaufseitig so an dem Schnittbereich der Schere entweder rechts oder links vorbeigeführt ist, daß die Schere zum Anlaufbetrieb einige Umdrehungen ausführen kann, bevor der Trennschnitt durch synchronisiertes Querbewegen der Weiche erfolgt.

Was die Ausführungsformen der Synchronisation anbelangt, gelten die Merkmale der Ansprüche 11 und 12 der DE-OS 3 020 084 entsprechend für die Querbewegung der der Schere vorgeordneten Weiche.

Es hängt jedoch mit dem Prinzip der Ablenkung des Walzgutes zum Schnitt zusammen, daß diese Ablenkung sanft beginnen sollte. Hierzu sieht die Erfindung einen Stellantrieb für die Weiche nach den Patentansprüchen 2 und 3 vor, der in der Zeichnung näher erläutert ist.

In der Zeichnung ist ein Ausführungsbeispiel einer Trommelschere gemäß der Erfindung dargestellt, und zwar zeigen

Fig. 1 eine Seitenansicht der Schere in Walzrichtung gesehen,
Fig. 2 ein Querschnitt nach der Linie A–A in Fig. 1 für eine Ausgangsstellung zum Abtrennen eines Vorderschopfes, und
Fig. 3 denselben Schnitt für eine Ausgangsstellung zum Abtrennen eines Hinterschopfes.

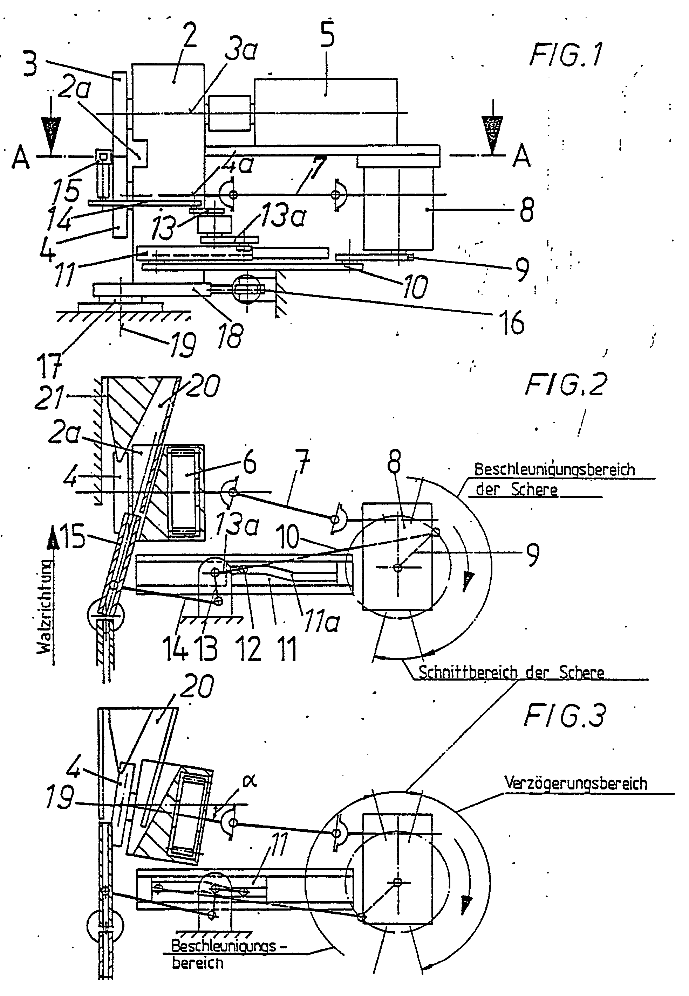

Die in Fig. 1 dargestellte Trommelschere hat einen Scherenständer 2 mit gegenläufigen Messertrommeln 3, 4, die von einem Motor 5 über ein Zahnradpaar 6 (Fig. 2) gemeinsam angetrieben sind. Von der Welle der unteren Messertrommel 4 führt eine Gelenkwelle 7 zu einem Schneckengetriebe 8, durch das in langsamer Übersetzung eine Kurbel 9 im Uhrzeigersinn angetrieben wird, die über eine Schubstange 10 einen quer zur Walzrichtung geradgeführten Nutenschlitten 11 reversierend bewegt. In die Steuernut des Nutenschlittens 11 greift eine Tastrolle 12 ein, die am Ende eines Armes 13a eines ortsfest gelagerten Winkelhebels 13 eingreift. Der freie Arm des Winkelhebels 13 ist über eine Schubstange 14 an eine Weiche 15 gelenkig angeschlossen. Diese Kombination eines Kurbeltriebes mit einer Nockensteuerung zum Verstellen einer Weiche ermöglicht eine sanfte, beschleunigungsarme Ablenkung des Drahtes und kann auch in anderen Zusammenhängen Verwendung finden.

Im übrigen ist der Scherenständer 2 mit seiner Sohlplatte 18 über ein Lager 17 um eine vertikale Achse 19 mittels eines Hydraulikzylinders 16 zwischen den beiden Grenz-Schwenklagen nach Fig. 2 und 3 schwenkbar. Die vertikale Achse 19 fluchtet im Gegensatz zu der Lehre nach der DE-OS 3 020 084 mit der Schnittlinie zwischen der gemeinsamen senkrechten Ebene der Rotationsachsen 3a, 4a der Messertrommeln 3, 4 und der mittleren senkrechten Rotationsebene der Messertrommeln 3, 4. Die in Fig. 1 von der Weiche 15 definierte Walzlinie liegt außerhalb der Fluchtlinie der vertikalen Achse 19.

Die Wirkungsweise der in der Zeichnung dargestellten Trommelschere ist folgende:

Zum Abtrennen eines Vorderschopfes eines Walzstabes ist die Weiche auf den Ablenkkanal 20 gerichtet, der zu einer nicht dargestellten Häckselschere führt. Der Scherenständer 2 steht in der Grenz-Schwenklage nach Fig. 2, d. h. die Schnittrichtung der Schere ist der Walzlinie bzw. dem mit der Walzrichtung fluchtenden Kanal 21 zugeordnet. Nach einem Startimpuls für die Schere, der von einer nicht dargestellten Fotozelle ausgelöst werden kann, können die Messertrommeln 3, 4 wirkungslos einige Umdrehungen ausführen, währenddessen die Kurbel 9 des Schneckengetriebes 8 über die Gelenkwelle 7 in Drehung im Uhrzeigersinn versetzt wird. Über den in der Zeichnung als "Beschleunigungsbereich der Schere" bezeichneten Bogenwinkel der Kurbel 9 löst der bewegte Nutenschlitten 11 keine Bewegung der Weiche 15 aus. Erst wenn die Kurbel 9 in den "Schnittbereich der Schere" gelangt, tritt die Tastrolle 12 des Winkelhebels 13 in einen geneigten Bereich 11a der Nut ein, wodurch die Weiche 15 in die Grenzlage nach Fig. 3 verschwenkt wird. Hierbei durchwandert das Vorderende eines Walzstabes den Schnittbereich der Schere, so daß ein Vorderschopf in den Ablenkkanal 20 fliegt, der nachfolgende Walzstab jedoch durch die weitere Querbewegung der Weiche 15 in den Kanal 21 geradeaus gelenkt wird.

Zum Schopfen des hinteren Endes eines Walzstabes ist die Grenzlage der Weiche 15 nach Fig. 3 die Ausgangsstellung. Der Scherenständer 2 ist um die vertikale Achse 19 um einen Winkel α im Uhrzeigersinn verschwenkt, so daß die Schnittrichtung der Schere dem Ablenkkanal 20 zugeordnet ist (Fig. 3). Auch bei dieser Konstellation kann die Schere nach einem Startimpuls über den mit "Beschleunigungsbereich" bezeichneten Bogenwinkel der Kurbel 9 mehrere Umdrehungen ausführen, bis der Nutenschlitten 11 nach rechts zurückbewegt und über die Tastrolle 12 die Weiche 15 auf dem Bogenwinkel "Schnittbereich der Schere" der Kurbel 9 im Uhrzeigersinn, d. h. nach rechts, querbewegt wird. Das abgeschnittene hintere Schopfende wird durch die geänderte Schnittrichtung der Schere und die verschwenkte Weiche in den Ablenkkanal 20 geworfen.

Obwohl bei der dargestellten mechanischen Synchronisation mittels der Gelenkwelle 7 und des Stellantriebes 8, 9 die Schere in den Ausgangsstellungen der Weiche 15 mehrere Umdrehungen ausführen kann, so ist dies noch als Anlaufbetrieb zu bezeichnen, da sie Stellung der Messer bei stillstehender Schere, d.h. beim Beginn des "Beschleunigungsbereiches" und am Ende des "Verzögerungsbereiches" nicht unabhängig von der Drehstellung der Kurbel 9 sein kann, wenn kurze Vorder- bzw. Hinterschopfe erhalten werden sollen. Dies gilt insbesondere dann, wenn die Messertrommeln 3 und 4 mit zwei in Umfangsrichtung versetzten Messerpaaren für das Heraustrennen eines Probestückes versehen sind und das Probestück möglichst am hinteren Ende eines Vorderschopfes oder am Vorderende eines Hinterschopfes anfallen soll. Ein Heraustrennen eines Probestückes mitten aus dem laufenden Walzgut ist mit der erfindungsgemäßen Schere nicht möglich.

Bei der dargestellten Trommelschere ist der Scherenständer 2 wegen der bis zwischen die Messertrommeln 3, 4 reichenden Weiche 15 in deren Ebene mit einer Ausnehmung 2a versehen. Dies liegt daran, weil in der Zeichnung der Schwenkbereich der Weiche 15 zur Verdeutlichung der Wirkungsweise größer dargestellt ist als notwendig.

Bei der beschriebenen Schere können alle beweglichen Teile vollkommen staubdicht abgekapselt und in einiger Entfernung vom heißen Walzmaterial angeordnet werden, was für den Verschleiß und für die Funktionssicherheit von großer Bedeutung ist.

## Patentansprüche

Anlauf- und Durchlauftrommelschere für hohe Drahtgeschwindigkeiten, deren Scherenständer (2) auf einer Sohlplatte (18) ruhend um eine vertikale Achse (19) zwischen zwei Grenzlagen derart verschwenkbar angeordnet ist, daß die Schnittrichtung der Schere wechselweise der Walzlinie (21) oder einem Ablenkkanal (20) zugeordnet ist, wobei der Trennschnitt durch eine synchronisierte relative Querbewegung zwischen Walzgut und Scherenmesser bzw. Schere erfolgt, und wobei die vertikale Achse (19) mit der Schnittlinie zwischen der gemeinsamen senkrechten Ebene der Rotationsachsen (3a, 4a) der Messertrommeln (3, 4) und der mittleren senkrechten Rotationsebene der Messertrommeln (3, 4) der Schere fluchtet, dadurch gekennzeichnet, daß die synchronisierte relative Querbewegung zum Trennschnitt durch eine der Schere vorgeordnete Weiche (15) bewirkt wird, die zwischen zwei Grenzlagen verschwenkbar ist, in denen das von der Weiche geführte Walzgut bei jeder Grenz-Schwenklage der Schere außerhalb des Schnittbereiches der Schere verläuft, wobei den Grenzlagen der Weiche der mit der Walzlinie fluchtende Kanal (21) und der Ablenkkanal (20) wechselweise zugeordnet ist und mit einem vom Scherenantrieb abgeleiteten Stellantrieb für die Weiche (15), daß ferner der Stellantrieb einen ortsfesten Winkelhebel (13) umfaßt, dessen freier Arm über eine Schubstange (14) an die Weiche gelenkig angeschlossen ist und dessen anderer Arm (13a) eine Tastrolle (12) trägt, die mit einem Nutenträger zusammenarbeitet, der in Ableitung vom Scherenantrieb bewegt wird und daß der Nutenträger aus einem im wesentlichen quer zur Walzrichtung geradgeführten Nutenschlitten (11) besteht, der von einem Kurbeltrieb (9, 10) reversierbar bewegt wird.

## Claims

Approach and passage drum shears for high rod speeds, the shears stand (2) of which is arranged to be resting on a sole plate (18) and to be pivotable in such a manner between two limit positions about a vertical axis (19) that the cutting direction of the shears is associated alternatively with the rolling axis (21) or a deflecting channel (20), wherein the severing cut takes place through a synchronised relative transverse movement between rolled stock and either shearing blade or shears and wherein the vertical axis (19) is in alignment with the line of intersection between the common vertical plane of the rotational axes (3a, 4a) of the blade drums (3, 4) and the mean vertical plane of rotation of the blade drums (3, 4) of the shears, characterised thereby, that the synchronised relative transverse movement for the severing cut is effected by a shunting switch (15), which is arranged upstream of the shears and pivotable between two limit positions, in which the rolled stock guided by the shunting switch runs outside the cutting region of the shears for each limiting pivotal position of the shears, wherein the channel (21) aligned with the rolling axis and the deflecting channel (20) are associated alternatively with the limit positions of the shunting switch and with a setting drive, which is derived from the shears drive, for the shunting switch (15), that the setting drive furthermore comprises an angle lever (13), which is of fixed location and the free arm of which is articulately connected to the shunting switch by way of a push rod (14) and the other arm (13a) of which carries a feeler roller (12), which cooperates with a groove carrier which is moved in derivation from the shears drive and that the groove carrier consists of a groove carriage (11), which is rectilinearly guided substantially transversely to the rolling direction and moved reversibly by a crank drive (9, 10).

**Revendications**

1. Cisaille rotative d'entrée et de passage pour trains à fils à grande vitesse, dont le montant (2), qui prend appui sur une semelle (18), est monté de manière à pouvoir pivoter autour d'un axe vertical (19) entre deux positions limites, de telle manière que la direction de coupe de la cisaille corresponde alternativement à la direction de laminage (21) et à celle d'un conduit de dérivation (20), le tronçonnage résultant d'un déplacement relatif transversal synchronisé entre le produit laminé et la lame de cisaille ou la cisaille et l'axe vertical (19) étant dans l'alignement de la ligne de coupe entre le plan vertical commun aux axes de rotation (3a, 4a) des tambours à lames (3, 4) et le plan de rotation vertical moyen des tambours à lames (3, 4) ou de la cisaille, caractérisée en ce que le déplacement relatif transversal synchronisé assurant le tronçonnage est produit par un aiguillage (15) qui est placé en amont de la cisaille et qui peut pivoter entre deux positions limites dans lesquelles le produit laminé guidé par l'aiguillage se déplace, dans chaque position de pivotement limite de la cisaille, à l'extérieur de la zone de coupe de la cisaille, les positions limites de l'aiguillage étant associées alternativement au conduit (21) qui est dans l'alignement de la direction de laminage et au conduit de dérivation (20) et le dispositif de commande de l'aiguillage (15) étant relié au dispositif de commande de la cisaille, en ce que le dispositif de commande de l'aiguillage comprend un levier coudé (13) monté à poste fixe dont le bras libre s'articule sur l'aiguillage par l'intermédiaire d'une bielle (14) et dont l'autre bras (13a) porte un galet palpeur (12) qui coopère avec un support à rainures qui se déplace en liaison avec le dispositif de commande de la cisaille et en ce que le support à rainures est constitué par un chariot à rainures (11) qui est guidé en ligne droite, transversalement par rapport à la direction de laminage, pour effectuer un déplacement à inversion de sens sous l'action d'une commande à manivelle (9, 10).

FIG.1

FIG.2

Beschleunigungsbereich
der Schere

Walzrichtung

Schnittbereich der Schere

FIG.3

Verzögerungsbereich

Beschleunigungsbereich